# EUROPEAN PATENT APPLICATION

(11) **EP 4 435 049 A1**
(43) Date of publication of application: **25.09.2024**
(21) Application number: 22894634.9
(22) Date of filing: 02.11.2022
(51) Int. Cl.: C08L 63/00, C08K 5/521

(54) **FLAME-RETARDANT EPOXY RESIN COMPOSITION**

(30) Priority: 16.11.2021 CN 202111352415
(71) Applicant: Sika Technology AG, 6340 Baar (CH)
(72) Inventor: CHENG, Zong, Shanghai 200131 (CN); GU, Chunhua, Shanghai 200131 (CN)
(74) Representative: Sika Patent Attorneys
(86) International application number: PCT/CN2022/129216
(87) International publication number: WO 2023/088097

(57) **Abstract**

The present invention relates to a flame-retardant epoxy resin composition, comprising on the basis of the total weight of the composition: A) 25~65 wt% of epoxy resin, B) 16-30 wt% of brominated epoxy resin, the brominated epoxy resin having a capping group selected from an epoxy group and a tribromophenol group, and C) 10-25 wt% of organophosphorus flame retardant. In addition, the present invention further relates to a method for preparing a composite material by means of vacuum infusion of the flame-retardant epoxy resin composition, and an article obtained by the method.

## Description

### Technical Field

The present invention relates to a flame-retardant epoxy resin composition, which is particularly applicable to vacuum infusion processes. In addition, the present invention further relates to the use of this flame-retardant epoxy resin composition and an article prepared therefrom.

### Background Art

Composite materials are extensively used in industrial manufacture, particularly in the manufacture of parts of vehicles such as automobiles, trains, ships and airplanes. Furthermore, manufacturing processes for composite materials are also continuously developing. The vacuum infusion process (sometimes also referred to as the vacuum introduction process) is a suitable processing method for processing and manufacturing composite materials. In this method, usually a reinforcing material such as a glass fiber and a carbon fiber is first placed on a mold, then a vacuum-applying device such as a vacuum bag or a vacuum infusion mesh is laid thereon in order to pump out the air in the system to form a negative pressure, and then a resin such as an epoxy resin is introduced into the mold to impregnate the reinforcing material and cured and molded therein.

It is usually desired that the epoxy resin used in this vacuum infusion process has a relatively low viscosity, and the article thereof has excellent physical properties, as well as transparency, flame-retardancy, etc.

CN 103627142 A provides a bicomponent flame-retardant epoxy resin composition suitable for vacuum infusion, in which a component A comprises a bisphenol A resin, a bromine-containing epoxy flame retardant and an organophosphorus flame retardant. The bromine-containing epoxy flame retardant used therein refers to a bromine-containing compound with a flame-retardant property, including additive bromine-containing flame retardants such as tetrabromoxylene, pentabromodiphenyl ether and octabromodiphenyl ether, as well as reactive bromine-containing flame retardants such as 2,3-dibromopropanol, tetrabromobisphenol S and tetrabromobisphenol A, in which the reactive group is hydroxyl or phenolic hydroxyl; however, this type of reactive group may reduce the mechanical properties of epoxy resins, such as flexural strength and tensile strength. The bromine-containing epoxy flame retardants mentioned in the patent are themselves all non-epoxy resin small molecules or monomer compounds.

However, epoxy resins used in vacuum infusion processes still have the need and room for further improvement.

### Summary of the Invention

The first aspect of the present invention is to provide a flame-retardant epoxy resin composition, which is particularly applicable to vacuum infusion processes. The epoxy resin composition not only can maintain superior flame-retardancy, processability and physical properties, but also have a lower viscosity and better adhesion compared to epoxy resin products in the prior art. The inventors of the present invention have found that the above purposes can be achieved by using a flame-retardant epoxy resin composition as described below in the specification.

In addition, the present invention further relates to the use of the flame-retardant epoxy resin composition in a vacuum infusion process and an article prepared from the flame-retardant epoxy resin composition.

Some other preferred embodiments of the present invention are the subject matter of the dependent claims.

### Detailed Description of the Invention

The first aspect of the present invention relates to a flame-retardant epoxy resin composition, based on the total weight of the composition, comprising:
A) 25~65 wt% of an epoxy resin,
B) 16~30 wt% of a brominated epoxy resin, wherein the brominated epoxy resin has a capping group selected from epoxy group or tribromophenol group, and
C) 10~25 wt% of an organophosphorus flame retardant.

In the text, the term "independently" when used in relation to substituents, residues or groups, should be interpreted to mean that substituents, residues or groups having an identical name in a single molecule may coexist in different meanings.

In the text, the prefix "poly(multi)" in the names of substances such as "polyol", "polyisocyanate", "polyether" or "polyamine" denotes that the corresponding substance contains formally more than one functional group by that name per molecule.

In the text, "molecular weight" should be understood to refer to the molar mass of a molecule (by gram/mole). "Average molecular weight" should be understood to refer to the number average molecular weight Mn of an oligomer or polymer mixture of a molecule, which is usually determined by GPC with respect to polystyrene as a standard sample.

In the text, "room temperature" refers to the temperature of 23°C.

In the text, "epoxy resin" refers to an epoxy resin or epoxy polymer having on average one or more, e.g. two or three or more, epoxy groups per molecule, preferably a liquid epoxy resin or a solid epoxy resin. The epoxy resin can be prepared, for example, in a known manner, by oxidation of a corresponding olefin or by reaction of an epichlorohydrin with a corresponding polyol or polyphenol. The term "solid epoxy resin" is well known to a person skilled in the field of epoxy resins and is used in contrast to "liquid epoxy resin". The glass transition temperature of a solid resin is above room temperature, which means the resin can be crushed at room temperature to obtain a free-flowing powder.

Suitable epoxy resins are especially aromatic epoxy resins, especially the glycidylated products of the following substance:
- bisphenol A, bisphenol F or bisphenol A/F, wherein A represents acetone and F represents formaldehyde, which are reactants for preparing these bisphenols. In the case of bisphenol F, positional isomers may also exist, especially those derived from 2,4'- or 2,2'-hydroxyphenyl methane;
- other bisphenols or polyphenols, for example, bis(4-hydroxyl-3-methylphenyl)methane, 2,2-bis(4-hydroxyl-3-methylphenyl)propane (bisphenol C), bis(3,5-dimethyl-4-hydroxylphenyl)methane, 2,2-bis(3,5-dimethyl-4-hydroxylphenyl)propane, 2,2-bis(3,5-dibromo-4-hydroxylphenyl)propane, 2,2-bis(4-hydroxyl-3-tertiary butylphenyl)propane, 2,2-bis(4-hydroxylphenyl)butane (bisphenol B), 3,3-bis(4-hydroxylphenyl)pentane, 3,4-bis(4-hydroxylphenyl)hexane, 4,4-bis(4-hydroxylphenyl)heptane, 2,4-bis(4-hydroxylphenyl)-2-methylbutane, 2,4-bis(3,5-dimethyl-4-hydroxylphenyl)-2-methylbutane, 1,1-bis(4-hydroxylphenyl)cyclohexane (bisphenol Z), 1,1-bis(4-hydroxylphenyl)-3,3,5-trimethylcyclohexane (bisphenol TMC), 1,1-bis(4-hydroxylphenyl)-1-phenylethane, 1,4-bis[2-(4-hydroxylphenyl)-2-propyl]benzene (bisphenol P), 1,3-bis[2-(4-hydroxylphenyl)-2-propyl]benzene (bisphenol M), 4,4'-dihydroxybiphenyl (DOD), 4,4'-dihydroxybenzophenone, bis(2-hydroxynaphth-1 -yl)methane, bis(4-hydroxynaphth-1-yl)methane, 1,5-dihydroxynaphthalene, tris(4-hydroxyl phenyl)methane, 1,1,2,2-tetrakis(4-hydroxylphenyl)ethane, bis(4-hydroxylphenyl)ether or bis(4-hydroxylphenyl)sulfone;
- condensation products of phenol and formaldehyde obtained under acidic conditions, for example, a phenol-novolac resin or a cresol-novolac resin;
- aromatic amines, for example, aniline, toluidine, 4-aminophenol, 4,4'-methylenediphenyldiamine, 4,4'-methylenediphenyldi(N-methyl)amine, 4,4'-[1,4-phenylene bis(1-methylethylidene)]bisaniline (bisaniline P) or 4,4'-[1,3-phenylene bis(1-methylethylidene)]bisaniline (bisaniline M).

Other suitable epoxy resins are especially aliphatic or cycloaliphatic polyepoxides, and are especially:
- saturated or unsaturated, branched or unbranched, cyclic or open-chain di, tri or tetrafunctional C₂ to C₃₀ alcohols, especially ethylene glycol, propylene glycol, butylene glycol, hexylene glycol, octylene glycol, polypropylene glycol, bishydroxymethyl cyclohexane, neopentyl glycol, dibromoneopentyl glycol, castor oil, trishydroxymethyl propane, trishydromethyl ethane, pentaerythritol, sorbitol or glycerol, or alkoxylated glycerol, or glycidyl ether of alkoxylated trishydroxymethyl propane;
- hydrogenated bisphenol A, F or A/F liquid resins, or glycidylated products of hydrogenated bisphenol A, F or A/F;
- N-glycidyl derivatives of amides or heterocyclic nitrogen base, for example, triglycidyl cyanurate or triglycidyl isocyanurate, or the reaction product of epichlorohydrin with hydantoin;
- epoxy resins from oxidation of olefin, for example, particularly vinylcyclohexene, dicyclopentadiene, cyclohexadiene, cyclododecadiene, cyclododecatriene, isoprene, 1,5-hexadiene, butadiene, polybutadiene or divinylbenzene.

In a further preferred embodiment of the present application, the epoxy resin is represented by formula (II) 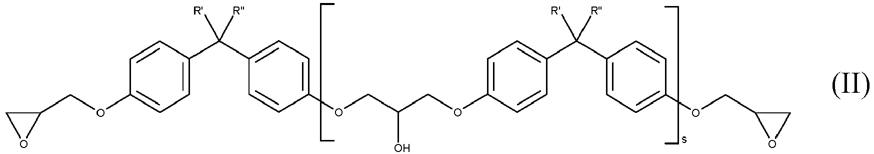 where substituents R' and R" are each independently H or CH₃.

In solid epoxy resins, the index s has a value of > 1.5, especially 2-12.

Such solid epoxy resins are commercially available, for example, from Dow or Huntsman or Hexion.

Compounds of formula (II) having the index s of 1 to 1.5 are referred to by a person skilled in the art as semisolid epoxy resins. For the purposes of the present invention, these compounds are also considered to be solid resins. However, preferred solid epoxy resins are epoxy resins in a narrow sense, i.e., those in which the index s is > 1.5.

In liquid epoxy resins, the index s has a value less than 1. Preferably, s has a value less than 0.2.

Therefore, preferably, the epoxy resin is a liquid epoxy resin of formula (II), and more preferably an epoxy resin based on bisphenol A, bisphenol F and/or bisphenol A/F, such as products of diglycidyl ethers of bisphenol A, bisphenol F and bisphenol A/F. This liquid resin can be available, for example, as Araldite^{®} GY 250, Araldite^{®} PY 304, Araldite^{®} GY 282 (Huntsman) or D.E.R.^{™} 331 or D.E.R.^{™} 330 (Dow) or Epikote 828 (Hexion).

In another advantageous embodiment of the present invention, a small amount of so-called epoxy-novolac resin (Novolac Epoxy Resin) can be used, for example, and added in an amount of 0-10 wt%, such as 1-6 wt%, based on the total weight of the composition. Especially, these resins have the following formula: 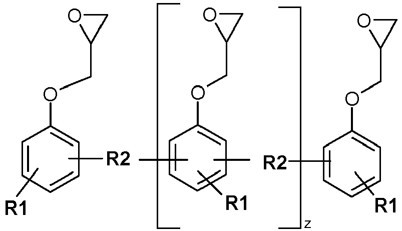 where R2 = 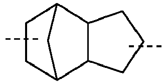 or CH₂, R1 = H or methyl, and z = 0 to 7.

More particularly, these resins are phenol or cresol epoxy novolac resins (R2 = CH₂).

These epoxy resins are commercially available as the trade names of EPN or ECN and Tactix^{®} from Huntsman, or are commercially available as the D.E.N.^{™} product series from Dow Chemical.

The proportion of the epoxy resin is preferably 30-62 wt%, for example, 35-59 wt%, based on the total weight of the epoxy resin composition. Too high a content of the epoxy resin, e.g., more than 65 wt.%, will result in poor processability and deterioration of the mechanical properties of the composition.

In the present invention, the epoxy resin composition should particularly contain brominated epoxy resin B), wherein the brominated epoxy resin has a capping group selected from an epoxy group and a tribromophenol group. The bromine content of the brominated epoxy resin refers to the mass percentage of bromine element based on the average molecular weight of the brominated epoxy resin.

In the context of the present invention, the "brominated epoxy resin" refers, in terms of the molecular structure, to a product of substitution on an epoxy resin molecule with a bromine atom. In some embodiments, the brominated epoxy resin can be regarded as a brominated product of an epoxy resin. The substitution position of bromine atom is not particularly limited, and can be positioned in the main chain or side chain or at the end of the epoxy resin.

In addition, the "brominated epoxy resin" according to the present invention should have a capping group selected from an epoxy group and a tribromophenol group. In the case of capping by a tribromophenol group, tribromophenol can be reacted with the epoxy group at the end of the epoxy resin to form a capping group in the form of tribromophenoxy linked by ether-oxygen.

The epoxy resin A) and the brominated epoxy resin B) may have the same or different epoxy resin bases. Therefore, the abovementioned epoxy resins and the preferred forms thereof are also suitable for epoxy resins on which the brominated epoxy resin is based, which may, for example, have the base structure as shown in formula (II) above.

More preferably, the brominated epoxy resin according to the present invention is a brominated epoxy resin based on the abovementioned epoxy resin of bisphenol A, bisphenol F and/or bisphenol A/F.

Therefore, the preferred brominated epoxy resins that meet the definition of the present invention comprise, for example: 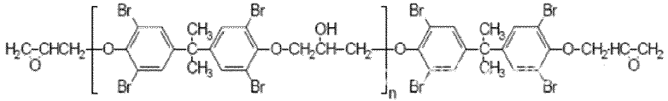 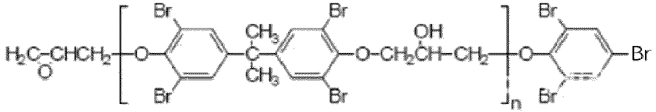 or 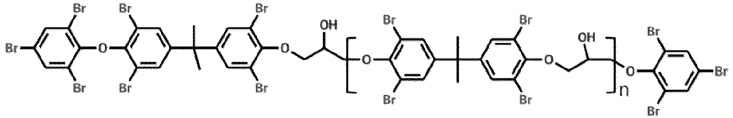 where n is greater than or equal to 0, for example >0.2, >1, >1.5, or for example, 2-12.

The brominated epoxy resins suitable for the present invention are commercially available, for example, brominated epoxy polymers of ICL F2000 series (F-2016, F-2100, F-2400, etc.) or Dow D.E.R 542 or NPEB 400, etc.

The inventors of the present invention found that, compared to traditional simple or monomeric brominated compounds, the brominated epoxy resin, when used in the flame-retardant epoxy resin composition according to the present invention, not only can provide a good flame-retardant property and have better compatibility with the epoxy resin, but also can maintain or improve the mechanical properties of the epoxy resin after curing. For example, compared to decabromodiphenylethane, the brominated epoxy resin of the present invention has better compatibility, and does not have the problem of precipitation or delamination; furthermore, compared to tetrabromobisphenol A or S, which has good compatibility with epoxy resins, the brominated epoxy resin of the present invention can lead to better mechanical properties of the epoxy resin after curing, and maintain the glass transition temperature of the epoxy resin. Therefore, in an embodiment, the epoxy resin composition of the present invention may contain a brominated compound other than the brominated epoxy resin in an amount of less than 1 wt%, for example, 0.5 wt% of the total weight of the composition, or even does not contain any brominated compound other than the brominated epoxy resin, particularly those brominated compounds usually used as flame retardants or flame-retardant substances.

Preferably, the brominated epoxy resin has a bromine content greater than or equal to 48%, for example, in the range of 48%-60%. If the bromine content is too low, below 48%, the desired flame-retardant characteristic may not be achievable; however, in order to satisfy the flame-retardant characteristic, the content of the brominated epoxy resin in the formulation may have to be increased excessively. The bromine content is defined as the proportion of bromine element in the total weight of the brominated epoxy resin.

According to the present invention, the content of the brominated epoxy resin should be 16-30 wt%, preferably 18-28 wt%, for example, 20-25 wt%. If the content of the brominated epoxy resin is too low, the expected accepted flame-retardant properties cannot be obtained; although it may be possible to compensate for the flame-retardant properties by increasing the amount of the organophosphorus flame retardant, this will lead to a significant reduction in mechanical properties. If the content of the brominated epoxy resin is too high, high viscosity may arise, which may affect workability.

In addition, the epoxy resin of the present invention should further contain an organophosphorus flame retardant. The organophosphorus flame retardant itself is known and can promote the production of more structurally stable crosslinked solid substances or carbonized layers when heated, thereby inhibiting burning and further pyrolysis of polymers. Organophosphorus flame retardants usually comprise various phosphates, phosphites, pyrophosphates, esters of phosphoric acid, esters of phosphorus acid, organophosphorus salts, phosphorus-containing heterocyclic compounds, and (poly)phosphates or (poly)esters of phosphoric acid, etc.

Examples of suitable organophosphorus flame retardants contain ammonium phosphate ((NH₄)₃PO₄), ammonium polyphosphate, melamine phosphate, melamine pyrophosphate, triphenyl phosphate, diphenyl benzyl phosphate, tricresyl phosphate, trimethyl phosphate, triethyl phosphate, tris(2-ethylhexyl)phosphate, trioctyl phosphate, dimethyl methylphosphonate, diethyl ethylphosphonate, mono-, bis- and tris-(isopropylphenyl)phosphates, bisphenol-bis(diphenyl phosphate), a resorcinol diphosphate oligomer, tetraphenyl-resorcinol diphosphate, diethylamine diphosphate, bisphenol A-bis-(diphenyl phosphate), tris(2-chloroethyl)phosphate, tris(2,3-dichloropropyl)phosphate, tris(1,3-dichloro-2-propyl)phosphate, tris(2,3-dibromopropyl)phosphate, and/or bis(2,3-dibromopropyl)dichloropropyl phosphate.

In a preferred embodiment, the organophosphorus flame retardant is selected from trimethyl phosphate, triethyl phosphate, tris(2-chloroethyl)phosphate, tris(2,3-dichloropropyl)phosphate, tris(1,3-dichloro-2-propyl)phosphate, tris(2,3-dibromopropyl)phosphate, and/or bis(2,3-dibromopropyl)dichloropropyl phosphate.

The content of the organophosphorus flame retardant is important in the epoxy resin composition of the present invention. If the content of the organophosphorus flame retardant exceeds 25 wt%, the mechanical properties of the epoxy resin composition would be greatly reduced, and slow organophosphorus migration is also likely to be induced at ambient temperature over a long period of time; and if the content of an organic flame retardant is less than 10%, the flame-retardant property of the system may be weakened. In an embodiment, the content of the organophosphorus flame retardant can be 12-20 wt%.

Although other types of flame retardants such as nitrogen flame retardants or phosphorus-nitrogen flame retardants are also possible, it is preferred that the composition of the present invention does not comprise other types of flame retardant, and particularly does not comprise an inorganic flame retardant. In terms of the vacuum infusion process, it is beneficial to include no inorganic flame retardants, since these retardants adversely affect the entry into a fiber network and do not contribute to the low viscosity requirement of the process due to their high tendency to settle.

In a further preferred embodiment, the epoxy resin composition can additionally contain at least one reactive diluent for epoxy resins. This reactive diluent is used to control and reduce the viscosity of an epoxy resin curing system, and a person skilled in the art knows how to select a suitable reactive diluent for a selected epoxy resin.

Examples of preferred reactive diluents are:
- glycidyl ethers of monofunctional saturated or unsaturated, branched or linear, cyclic or open-chain C₄-C₃₀ alcohols, for example, butanol glycidyl ether, hexanol glycidyl ether, 2-ethylhexanol glycidyl ether, allyl glycidyl ether, tetrahydrofurfuryl and furfuryl glycidyl ether, trimethoxy silyl glycidyl ether, etc.;
- glycidyl ethers of bifunctional saturated or unsaturated, branched or linear, cyclic or open-chain aliphatic C₂-C₃₀ alcohols, for example, ethylene glycol glycidyl ether, butylene glycol glycidyl ether, hexylene glycol glycidyl ether, octylene glycol glycidyl ether, cyclohexane dimethanol diglycidyl ether, neopentyl glycol diglycidyl ether, etc.;
- glycidyl ethers of trifunctional or polyfunctional, saturated or unsaturated, branched or unbranched, cyclic or open-chain alcohols, such as glycidyl ethers of epoxidized castor oil, epoxidized trishydroxymethyl propane, epoxidized pentaerythritol or aliphatic polyols, such as sorbitol, glycerol, trishydroxymethyl propane, etc.;
- glycidyl ethers of phenol compounds and aniline compounds, for example, phenyl glycidyl ether, cresol glycidyl ether, resorcinol diglycidyl ether, p-tert-butylphenyl glycidyl ether, nonylphenol glycidyl ether, 3-n-pentadecenyl glycidyl ether (from cashew nut shell oil), N,N-diglycidylaniline, etc.;
- epoxidized amines, for example, N,N-diglycidyl cyclohexylamine, etc.;
- epoxidized mono- or di-carboxylic acids, for example, glycidyl neodecanoate, glycidyl methacrylate, glycidyl benzoate, diglycidyl phthalate, diglycidyl tetrahydrophthalate and diglycidyl hexahydrophthalate, diglycidyl esters of dimeric fatty acids, etc.;
- epoxidized bi- or tri-functional polyether polyols with low to high molecular weights, for example, polyethylene glycol diglycidyl ether, polypropylene glycol diglycidyl ether, etc.

Particularly preferred are hexanediol diglycidyl ether, cresol glycidyl ether, p-tert-butylphenyl glycidyl ether, polypropylenglycol diglycidyl ether and polyethylene glycol diglycidyl ether.

The total proportion of the reactive diluent, if used, in the epoxy resin can advantageously be >0-30%, such as 1%-30% or 5%-25%, based on the total weight of the epoxy resin composition.

The composition of the present invention preferably further contains at least one curing agent for epoxy resins. Compounds that are commonly used and known to react with epoxy groups can be used as the curing agent. The epoxy resin is thereby crosslinked. The curing agent is preferably an alkaline curing agent, particularly an amine compound or amide. Preferably, the curing agent contains at least two primary or secondary amino groups per molecule. An amine compound that has two or more amino groups per molecule is hereinafter referred to as "polyamine". If polyamines are polymers, they contain at least two amino groups per molecule on average. According to the present invention, a mixture of different curing agents may be used, for example, a mixture of two, three or more different curing agents.

In a preferred embodiment of the present invention, the curing agent contains at least one polyamine, which is preferably selected from aliphatic, alicyclic or aromatic aliphatic primary diamines, triamines and tetramines, polyamines having 4 or more amino groups per molecule, polyamines containing a secondary amino group, amine/polyepoxide adducts, polyethylene imine), polyamidoamine, polyether amine and amino-terminated butadiene/acrylonitrile copolymers.

The polyamine may also be polyoxyalkylene diamines having a molecular weight of 500 g/mol or less (Jeffamine^{®} D-230, Jeffamine D400, and Jeffamine^{®} EDR-148), 4,7,10-trioxatridecane-1-13-diamine, 4,9-dioxacyclododecane-1,12-diamine, ethylenediamine and/or 3(4),8(9)-bis-(aminomethyl)-tricyclo[5.2.1.02,6]decane (TCD diamine^{®}, manufactured by Celanese Chemicals).

Other polyamines suitable for use as a curing agent are, for example:
- aliphatic, alicyclic or aromatic aliphatic primary diamines, for example, ethylenediamine, 1,2-propylenediamine, 1,3-propylenediamine, 2-methyl-1,2-propylenediamine, 2,2-dimethyl-1,3-propylenediamine, 1,3-butanediamine, 1,4-butanediamine, 1,3-pentanediamine (DAMP), 1,5-pentanediamine, 1,5-diamino-2-methylpenta (MPMD), 2-butyl-2-ethyl-1,5-pentanediamine (C11-neodiamine), 1,6-hexanediamine, 2,5-dimethyl-1,6-hexanediamine, 2,2,4- and 2,4,4-trimethylhexamethylene diamines (TMD), 1,7-heptanediamine, 1,8-octanediamine, 1,9-nonanediamine, 1,10-decanediamine, 1,11-undecanediamine, 1,12-dodecanediamine, 1,2-, 1,3- and 1,4-diaminocyclohexanes, bis-(4-aminocyclohexyl)-methane (H12-MDA), bis-(4-amino-3-methylcyclohexyl)-methane, bis-(4-amino-3-ethylcyclohexyl)-methane, bis-(4-amino-3,5-dimethylcyclohexyl)-methane, bis-(4-amino-3-ethyl-5-methylcyclohexyl)-methane (M-MECA), 1-amino-3-aminomethyl-3,5,5-trimethylcyclohexane ( = isophoronediamine or IPDA), 2- and 4-methyl-1,3-diaminocyclohexanes and a mixture thereof, 1,3- and 1,4-bis-(aminomethyl)-cyclohexanes, aminoethylpiperazine, 1,3-cyclohexylidene bis-(methylamine), 2,5(2,6)-bis-(aminomethyl)-bicyclo[2.2.1]heptane (NBDA), 3(4),8(9)-bis-(aminomethyl)-tricyclo[5.2.1.02,6]decane, 1,4-diamino-2,2,6-trimethylcyclohexane (TMCDA), 1,8-menthane diamine, 3,9-bis-(3-aminopropyl)-2,4,8,10-tetraoxaspiro[5.5]undecane and 1,3- and 1,4-xylylenediamine;
- aliphatic primary diamines containing ether groups; for example, bis-(2-aminoethyl)-ether, 3,6-dioxaoctane-1,8-diamine, 4,7-dioxaodecane-1,10-diamine, 4,7-dioxaodecane-2,9-diamine, 4,9-dioxacyclododecane-1,12-diamine, 5,8-dioxacyclododecane-3,10-diamine, 4,7,10-trioxatridecane-1,13-diamine and higher oligomers of these diamines, bis-(3-aminopropyl)-polytetrahydrofuran, and other polytetrahydrofurandiamines and polyoxyalkylene diamines having a molecular weight of, for example, 350-2000. The latter is usually a product from amination of polyoxyalkylene glycol, and is available under the names of, for example, Jeffamine^{®} (Huntsman), polyether amine (from BASF) or PC Amines^{®} (from Nitroil). Particularly suitable polyoxyalkylene diamines are Jeffamine^{®} D-230, Jeffamine^{®} D-400, Jeffamine^{®} D-2000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; polyether amine D 230, polyether amine D 400 and polyether amine D 2000, PC Amine^{®} DA 250, PC Amine^{®} DA 400, PC Amine^{®} DA 650 and PC Amine^{®} DA 2000;
- polyamines containing secondary amino groups; for example, diethylenetriamine (DETA), N,N-bis-(2-aminoethyl)-ethylenediamine, dipropylenetriamine (DPTA), bis-hexamethylenetriamine (BHMT), 3-(2-aminoethyl)-aminopropylamine, triethylenetetramine, tetraethylenepentamine, N3-(3-aminopentyl)-1,3-pentanediamine, N5-(3-aminopropyl)-2-methyl-1,5-pentanediamine, N5-(3-amino-1-ethylpropyl)-2-methyl-1,5-pentanediamine, N,N'-dibutylethylenediamine; N,N'-di-tert-butylethylenediamine, N,N'-diethyl-1,6-hexanediamine, 1-(1-methylethylamino)-3-(1-methylethyl-aminomethyl)-3,5,5-trimethylcyclohexane (Jefflink^{®} 754, from Huntsman), N4-cyclohexyl-2-methyl-N2-(2-methylpropyl)-2,4-pentanediamine, N,N'-dialkyl-1,3-xylylenediamine, bis-(4-(N-alkylamino)-cyclohexyl)-methane, 4,4'-trimethylenedipiperidine, N-alkylated polyether amine, for example, Jeffamine^{®} SD-231, SD-401, SD-404 and SD-2001 types (from Huntsman);
- amine/polyepoxide adducts; particularly adducts of an abovementioned polyamine with a diepoxide at a molar ratio of at least 2/1, particularly a molar ratio of 2/1 to 10/1;
- polyamidoamines, which are reaction products of mono- or polycarboxylic acids or esters or anhydrides thereof, particularly reaction products of dimeric fatty acids with stoichiometrically excessive aliphatic, alicyclic or aromatic polyamines, particularly polyalkyleneamines, such as DETA or triethylenetetramine (TETA), and particularly commercially-available polyamidoamines of Versamid^{®} 100, 125, 140 and 150 (from Cognis), Aradur^{®} 125, 140, 223, 250 and 848 (from Huntsman), Euretek^{®} 3607, Euretek^{®} 530 (from Huntsman), Beckopox^{®} EH 651, EH 654, EH 655, EH 661 and EH 663 (from Cytec);
- polyethylene imines (PEI), which are branched polymer amines obtained from the polymerization of ethylene imide. Suitable polyethylene imines usually have an average molecular weight of 250-25000 g/mol, and contain tertiary, secondary and primary amino groups. For example, polyethylene imines are available under the trade names of Lupasol^{®} (from BASF), for example, Lupasol^{®} WF, Lupasol^{®} FG, Lupasol^{®} G20 and Lupasol^{®} PR 8515.
- Mannich bases; i.e., amines having other functional groups, which can be obtained by the Mannich reaction, in which the aminoalkylation of a CH-acidic compound with an aldehyde and ammonia, or a primary amine or a secondary amine is carried out.

An acidic curing agent may also be used as the curing agent, particularly an anhydride. Catalytically active curing agents such as a fluoride, for example boron trifluoride, may also be used.

The ratio of the curing agent component to the epoxy resin component may be determined on the basis of the equivalent amounts and the stoichiometric ratio of the reactive groups thereof involved in the curing reaction. In an exemplary preferred embodiment, an epoxy resin composition is formulated in such a way that the content of the curing agent is 0.5-15 wt%, preferably 1-10 wt%, based on the total weight of the epoxy resin composition.

The epoxy resin composition of the present invention may comprise one or more additional additives, especially a catalyst, stabilizer, especially heat and/or light stabilizers, a thixotropic agent, a plasticizer, a solvent, a mineral or organic filler, a foaming agent, a dye and a pigment, a preservative, a surfactant, a defoamer and an adhesion promoter.

Those suitable for use as the plasticizer are especially phenyl alkylsulfonate or N-butyl benzene sulfonamide, such as those commercially available from Bayer as Mesamoll^{®} or Dellatol BBS.

Those suitable for use as the stabilizer are especially optionally substituted phenols, for example, BHT or Wingstay^{®} T (Elikem), sterically hindered amines or N-oxy compounds, for example, TEMPO (Evonik).

Those suitable for use as the adhesion promoter are, for example, organoalkoxysilanes, such as 3-glycidyloxypropyl trimethoxysilane, 3-aminopropyl-trimethoxysilane, N-(2-aminoethyl)-3-aminopropyltrimethoxysilane, N-(2-aminoethyl)-N'-[3-(trimethoxysilyl)-propyl]-ethylenediamine, 3-ureidopropyltrimethoxysilane, 3-chloropropyltrimethoxysilane, vinyltrimethoxysilane, or corresponding organosilanes having an epoxy group or (poly)etheroxy group instead of the methoxy group.

The epoxy resin composition of the present invention can be provided as a bicomponent system. Accordingly, the composition comprises two individual components. The components are stored separately in separate containers, such as drums, barrels, cartridges, capsules or bags, so as to avoid spontaneous reactions. When used, the components are combined with each other. Upon the components being mixed together, a curing reaction starts, allowing the composition to be processed within an open time after mixing the components.

The epoxy resin composition is often provided to users as a bicomponent system. In this case, for example, the epoxy resin and the curing agent are usually contained in different components, so that the curing reaction can take place only when the user mixes the components.

In a preferred embodiment, the epoxy resin composition of the present invention is a bicomponent, wherein a first component contains at least the epoxy resin, the brominated epoxy resin, at least a part of the organophosphorus flame retardant and optionally an additional additive such as a reactive diluent, while a second component contains a curing agent, the remaining part of the organophosphorus flame retardant and optionally an additional additive.

Yet another aspect of the present invention relates to a method for preparing a composite material by vacuum infusion; the method comprises:
a) placing a reinforcing material into a mold;
b) applying vacuum to the mold to form a negative pressure; and
c) introducing the epoxy resin composition of the present invention into the mold.

Herein, the reinforcing material can be a reinforcing fiber selected from a glass fiber, a carbon fiber and a Kevlar aramid fiber.

In a specific embodiment, these reinforcing materials can first be laid in the mold in a certain direction, either in a flat manner, or in a flat manner by rotating at an angle. Then, a mechanism for assisting in the formation of vacuum is provided on the mold, for example, a vacuum bag and an infusion mesh are provided with a seal strip provided in the periphery. Next, after confirming that the sealing of the laminate is accepted, a vacuum is applied through a vacuum apparatus to introduce the epoxy resin composition of the present invention into the reinforcing material. Herein, all components of a mono-component or multi-component epoxy resin composition of the present invention are mixed until uniform, and then a guide tube can be inserted into the resin mixture to introduce same into the reinforcing material with the assistance of the vacuum. Finally, the composition is cured and molded under suitable conditions to obtain a vacuum infusion product.

Finally, the present invention further relates to a product manufactured by the abovementioned epoxy resin composition, particularly a product manufactured by a vacuum infusion process, such as a part in vehicles such as automobiles, trains, ships and airplanes, and a part for engineering construction or household appliances.

### Examples

The present application will be further described below by way of examples, but it should be clarified that the present application is not limited to these examples.

### List of main raw materials

| Name/grade | Composition or description |
|---|---|
| D.E.R.331 or D.E.R.383 | Bisphenol A epoxy resin |
| ERISYS GE21 | 1,4-Butanediol diglycidyl ether, reactive diluent |
| TBBPA | Tetrabromobisphenol A |
| ICL F2016 or NPEB 400 | Brominated epoxy resin |
| DEEP | Diethyl ethylphosphonate |
| TEP | Triethyl phosphate |
| TMP | Trimethyl phosphate |
| KH570 | Coupling agent (γ-glycidoxypropyltrimethoxysilane) |

### Formulation of first component containing epoxy resin

### Example 1 (Ex1)

62.5 g of D.E.R.331 and 22 g of ICL F2016 were placed in a container, and stirred and heated to 80°C, and were cooled to room temperature after the brominated epoxy resin was completely dissolved in the epoxy resin. Then 15 g of the organophosphorus flame retardant of TEP and 0.5 g of KH570 were added and mixed with a paddle stirrer for about 20 minutes to obtain the epoxy resin component.

### Example 2 (Ex2)

49.4 g of D.E.R.338, 22 g of NPEB 400, 10 g of the diluent of ERISYS GE21 and 18.1 g of the organophosphorus flame retardant of DEEP, as well as 0.5 g of KH570 were placed in a sealed container, and were stirred at room temperature for 2 hours, until a uniform resin mixture in which the brominated epoxy resin was completely dissolved was obtained, whereby the epoxy resin component was obtained.

### Example 3 (Ex3)

40 g of D.E.R.331, 22 g of NPEB 400, 19.5 g of the diluent of trimethylolpropane triglycidyl ether and 18 g of the organophosphorus flame retardant of DEEP, as well as 0.5 g of KH570 were placed in a sealed container, and were stirred at room temperature for 2 hours, until a uniform resin mixture in which the brominated epoxy resin was completely dissolved was obtained, whereby the epoxy resin component was obtained.

### Example 4 (Ex4)

57.5 g of D.E.R.331 and 22 g of ICL F2016 were placed in a container, and stirred and heated to 60°C, and were cooled to room temperature after the brominated epoxy resin was completely dissolved in the epoxy resin. Then 20 g of the organophosphorus flame retardant of TEP and 0.5 g of KH570 were added and mixed with a paddle stirrer for about 20 minutes to obtain the epoxy resin component.

### Comparative example 1 (Ref.1)

71.5 g of D.E.R.331, 18 g of tetrabromobisphenol A (TBBPA), and 10 g of the organophosphorus flame retardant of TMP, as well as 0.5 g of KH570 were placed in a sealed container, and were stirred at room temperature for 2 hours, until a uniform resin mixture was obtained, whereby the epoxy resin component was obtained.

### Comparative example 3 (Ref.3)

56.56 g of D.E.R.331, 22 g of ICL F2016, 12.74 g of the diluent of ERISYS GE21 and 8.2 g of the organophosphorus flame retardant of TEP, as well as 0.5 g of KH570 were placed in a sealed container, and were stirred at room temperature for 2 hours, until a uniform resin mixture was obtained, whereby the epoxy resin component was obtained.

### Comparative example 4 (Ref.4)

64.5 g of D.E.R.331, 1.8 g of the diluent of ERISYS GE21, 18 g of tetrabromobisphenol A (TBBPA), and 15 g of the organophosphorus flame retardant of TEP, as well as 0.7 g of KH570 were placed in a sealed container, and were stirred at room temperature for 2 hours, until a uniform resin mixture was obtained, whereby the epoxy resin component was obtained.

### Comparative example 7 (Ref. 7)

51.3 g of D.E.R.331 and 22 g of ICL F2016 were placed in a container, and stirred and heated to 100°C, and were cooled to room temperature after the brominated epoxy resin was completely dissolved in the epoxy resin. Then 26 g of the organophosphorus flame retardant of DEEP and 0.7 g of KH570 were added and mixed with a paddle stirrer for about 20 minutes to obtain the epoxy resin component.

### Comparative example 8 (Ref.8)

64.5 g of D.E.R.331, 5.8 g of ERISYS GE21, 14 g of NPEB 400 and 15 g of the organophosphorus flame retardant of TMP, as well as 0.7 g of KH570 were placed in a sealed container, and were stirred at room temperature for 2 hours, until a uniform resin mixture was obtained, whereby the epoxy resin component was obtained.

### Comparative example 9 (Ref.9)

49.3 g of D.E.R.331 and 35 g of NPEB 400 were placed in a container, and stirred and heated to 60°C, and were cooled to room temperature after the brominated epoxy resin was completely dissolved in the epoxy resin. Then 15 g of the organophosphorus flame retardant of TMP and 0.7 g of the coupling agent were added and mixed with a paddle stirrer for about 20 minutes to obtain the epoxy resin component.

### Formulation of second component containing curing agent

50 g of isophoronediamine and 50 g of triethylenetetramine were placed in a container, and stirred and mixed at the temperature of 23°C for 20-30 minutes, then the material was discharged to obtain the second component containing the curing agent. The curing agent component thus produced was used in all examples.

### Formulation of epoxy resin composition

Each of the first components containing epoxy resin prepared as above and the second component containing curing agent prepared as above were respectively mixed at room temperature at a mass ratio of 100 : 12 until uniform to formulate epoxy resin compositions. Then each of the prepared epoxy resin compositions was tested according to the performance test method described below, and the test results are listed in the following table.

### Description of performance test

### 1. Viscosity test

Brookfield LVT rotation viscosimeter was used, and the sample was kept under the conditions of a constant temperature and constant humidity (23°C/50%H) for 24 hours, and then the resin viscosity and the mixture viscosity were tested by using rotor No. 2. The horizontal line of the height of the test sample should be aligned with the horizontal line on the rotor, and the rotation speed was adjusted according to the viscosity of the sample to determine the most appropriate rotation speed. In the table, the mix viscosities listed refer to viscosities of the formulated epoxy resin mixtures.

### 2. UL94 flame retardant vertical burning test

The resin and the curing agent were mixed until uniform and poured into a mold of 125 mm * 50 mm * 3 mm, and this was cured in an oven at 80°C for 16 hours. Then the sample article was removed and placed in a constant-temperature and constant-humidity (23±2°C/50±5%H) environment for 72 hours.

A flame intensity of 50 W and a flame height of 20±1 mm were applied to the sample strip for 10 seconds. Cotton with a maximum thickness of 6 mm was placed 300±10 mm from the bottom of the sample, the burning was stopped and the afterflame time t1 of the sample (the burning time of the sample strip after the first application of flame) was recorded; after the flame stopped, a flame was applied immediately for 10 seconds, and the flame was removed and the sample afterflame time t2 (the burning time of the sample strip after the second application of flame) and afterburning time t3 were recorded. The above test was repeated 5 times.

Whether the test sample strips reached the V0 level was determined according to the criteria listed in the following table; if a sample reached the V0 level, it was recorded as "Pass", and if not, it was recorded as "Fail".

| Conditions for judging | V0 |
|---|---|
| Afterflame time t1 or t2 of a single sample strip | ≤ 10 s |
| Sum of five sets of afterflame times of sample strips | ≤ 50 s |
| Sum of afterflame time and afterburning time after the second application of flame | ≤ 30 s |
| Whether the residual sample strip is still on fastener | NO |
| Whether the drops ignite the cotton | NO |

### 3. Mechanical property test

Tests for flexural strength and flexural modulus were performed with reference to ISO 178:1993. The units of flexural strength and modulus in the following table are all MPa.

**Table 1**

| | Ex1 | Ex2 | Ex3 | Ex4 | Ref1 | Ref3 | Ref4 | Ref7 | Ref8 | Ref9 |
|---|---|---|---|---|---|---|---|---|---|---|
| Mix viscosi ty | 300c P | 200c P | 290c P | 290c P | 130 0cP | 660c P | 600c P | 285c P | 350c P | 150 0cP |
| UL94 V0 | Pass | Pass | Pass | Pass | Fail | Fail | Fail | Pass | Fail | Pass |
| Flexur al | Not teste | Not teste | 100 | 88 | Not teste | Not teste | 29 | 70 | Not teste | Not teste |
| strengt h | d | d | | | d | d | | | d | d |
| Bendin g modul us | Not teste d | Not teste d | 281 0 | 276 0 | Not teste d | Not teste d | 750 | 250 0 | Not teste d | Not teste d |

## Claims

1. A flame-retardant epoxy resin composition, based on the total weight of the composition, comprising:
A) 25~65 wt% of an epoxy resin,
B) 16-30 wt% of a brominated epoxy resin, wherein the brominated epoxy resin has a capping group selected from an epoxy group and a tribromophenol group, and
C) 10-25 wt% of an organophosphorus flame retardant.

2. The flame-retardant epoxy resin composition as claimed in claim 1, **characterized in that** the composition comprises 30-62 wt%, for example 35-59 wt% of the epoxy resin.

3. The flame-retardant epoxy resin composition as claimed in any one of the preceding claims, **characterized in that** the epoxy resin is an aromatic epoxy resin, and is preferably an epoxy resin based on bisphenol A, bisphenol F and/or bisphenol A/F, such as diglycidyl ethers of bisphenol A, bisphenol F and bisphenol A/F.

4. The flame-retardant epoxy resin composition as claimed in any one of the preceding claims, **characterized in that** the brominated epoxy resin is a brominated epoxy resin based on bisphenol A, bisphenol F and/or bisphenol A/F.

5. The flame-retardant epoxy resin composition as claimed in any one of the preceding claims, **characterized in that** the brominated epoxy resin has a bromine content ≥ 48%.

6. The flame-retardant epoxy resin composition as claimed in any one of the preceding claims, **characterized in that** the brominated epoxy resin has a content of 18-28 wt%, for example, 20-25 wt%.

7. The flame-retardant epoxy resin composition as claimed in any one of the preceding claims, **characterized in that** the organophosphorus flame retardant is selected from trimethyl phosphate, triethyl phosphate, tris(2-chloroethyl) phosphate, tris (2,3-dichloropropyl)phosphate, tris(1,3-dichloro-2-propyl)phosphate, tris(2,3-dibromopropyl)phosphate, and/or bis(2,3-dibromopropyl)dichloropropyl phosphate.

8. The flame-retardant epoxy resin composition as claimed in any one of the preceding claims, **characterized in that** the epoxy resin composition is a bicomponent, wherein a first component contains at least the epoxy resin, the brominated epoxy resin, at least a part of the organophosphorus flame retardant and optionally an additional additive such as a reactive diluent, while a second component contains a curing agent, the remaining part of the organophosphorus flame retardant and optionally an additional additive.

9. The flame-retardant epoxy resin composition as claimed in any one of the preceding claims, **characterized in that** the epoxy resin composition further contains a reactive diluent in a total proportion of 1%-30%, such as 5%-25%, based on the total weight of the epoxy resin composition.

10. A method for preparing a composite material by vacuum infusion, comprising:
a) placing a reinforcing material into a mold;
b) applying vacuum to the mold to form a negative pressure; and
c) introducing the epoxy resin composition as claimed in any one of claims 1 to 9 into the mold.

11. The method according to claim 10, wherein the reinforcing material can be a reinforcing fiber selected from a glass fiber, a carbon fiber and a Kevlar aramid fiber.

12. An article prepared by the method as claimed in claim 10.
